# EUROPÄISCHE PATENTSCHRIFT

(11) **EP 1 935 811 B1**
(45) Veröffentlichungstag und Bekanntmachung des Hinweises auf die Patenterteilung: **06.06.2012**
(21) Anmeldenummer: 07020559.6
(22) Anmeldetag: 20.10.2007
(51) Int. Cl.: B65G 21/20, B65G 51/03

(54) **Luftförderer für Behältnisse**
Air conveyor for containers
Convoyeur pneumatique pour récipients

(30) Priorität: 20.12.2006 DE 102006060110
(43) Veröffentlichungstag der Anmeldung: 25.06.2008
(73) Patentinhaber: Krones AG, 93073 Neutraubling (DE)
(72) Erfinder: Paul, Christian, 93080 Pentling (DE); Seidl, Andreas, 93093 Donaustauf (DE); Sigler, Markus, 93096 Köfering (DE); Dragon, Christoph, 93073 Neutraubling (DE)

(56) Entgegenhaltungen:
- WO-A-2004/067420
- WO-A-2004/096680
- US-A1- 2006 180 430

## Beschreibung

Die vorliegende Erfindung bezieht sich auf eine Transportvorrichtung für Behältnisse. Die Erfindung wird unter Bezugnahme auf eine Transportvorrichtung beschrieben, in der Kunststoffbehältnisse, beispielsweise PET-Flaschen, befördert werden. Gegenstand der Erfindung sind insbesondere solche Transportvorrichtungen, bei denen die Behältnisse mittels Luftdruck befördert werden.

Derartige Transportvorrichtungen weisen üblicherweise eine Aufnahmeschiene auf, in die ein Hals des zu führenden Behältnisses eingreift. Mittels Luftdruck, mit dem die oberen Bereiche der Behältnisse beaufschlagt werden, werden die Behältnisse gegenüber dieser Aufnahmeschiene bewegt.

Dabei ist es aus dem Stand der Technik auch bekannt, die unteren Bereiche der Behältnisse bzw. deren Bäuche seitlich zu führen, um insbesondere zu starke Schwankungen oder ein zu starkes Schaukeln der Behältnisse während des Transports zu vermeiden.

Aus der WO 2004/099042 A1 ist eine Förderstrecke mit verstellbaren Führungsgeländern und einem Stellantrieb bekannt. Dabei kann durch diesen Stellantrieb der seitliche Abstand der verstellbaren Geländer verstellt werden und damit eine Einstellung auf Behältnisse mit unterschiedlichen Durchmesser erfolgen. Diese Vorrichtung weist einen Luftführungskasten auf, der durch mehrere in Förderrichtung versetzt angeordnete Gebläse ständig mit Luft gespeist wird.

Dabei ist es jedoch oftmals wünschenswert, diese verstellbaren Geländer zur Führung der Behältnisse nicht nur auf den Durchmesser der Behältnisse einstellen zu können, sondern auch in der Längsrichtung der Behältnisse bzw. in der Höhe der Behältnisse verschieben zu können. Auf diese Weise kann eine Einstellung an unterschiedliche Behältnishöhen erfolgen. Dabei ist zu beachten, dass in Abhängigkeit von der Höhe der Behältnisse auch unterschiedliche Höhen, an denen die jeweiligen verstellbaren Führungsgeländer angeordnet sind, für eine ideale Führung wünschenswert sind.

Aus der WO 2004/067420 A1 ist eine Transportvorrichtung für Kunststoffbehältnisse bekannt. Diese Führungseinrichtung bzw. die Geländer für die Behältnisse sind dabei in Längsrichtung der Behältnisse bzw. in der Höhe der Behältnisse verschiebbar. Dabei werden jedoch die einzelnen Führungseinrichtungen jeweils separat durch eigene voneinander unabhängige Verstellmechanismen verschoben. Dies führt zu einem sehr hohen Aufwand bei der Herstellung und der Bedienung, da eine Vielzahl von voneinander unabhängigen Verstellmechanismen einschließlich Hydraulikzylindern und dergleichen vorgesehen werden müssen.

Zwar wird in der WO 2004/067420 dargestellt, dass auch zwei sich bezüglich der Bewegungsrichtung der Behältnisse gegenüberliegende Führungseinrichtungen gekoppelt verstellt werden können, damit ist jedoch noch keine wesentliche Einsparung des Antriebsaufwands erreicht, da entlang der Führungsstrecke der Behältnisse eine Vielzahl von derartigen Führungselementen angeordnet sein muss, um ein Geländer in seiner Gesamtheit heben oder senken zu können. Daneben ist der in der WO 2004/067420 beschriebene Koppelmechanismus für die gegenüberliegenden Führungseinrichtungen sehr aufwendig und nur schwer zugänglich

Aus der EP 1 409 385 B1 und der DE 299 02 470 U1 sind ebenfalls Luftförderer der gattungsgemäßen Art bekannt.

Die US 2006/180430 A1 offenbart einen Luftförderer mit Behälterführung, der einen Schwenkmechanismus aufweist, mit dessen Hilfe die Behälterführung an unterschiedliche Flaschengrößen angepasst werden kann. Die verwendete Seilkonstruktion kann jedoch nur Kräften in einer Richtung entgegenwirken. Erfolgt eine Krafteinwirkung aus entgegengesetzter Richtung, besteht die Gefahr, dass die Führungseinrichtung in den Transportweg der Behälter bewegt wird und die Behälter blockiert.

Der vorliegenden Erfindung liegt daher die Aufgabe zugrunde, gattungsgemäße Transportvorrichtungen einfacher zu gestalten und insbesondere die Anpassbarkeit oder Umstellbarkeit auf unterschiedliche Flaschenformen und -größen einfacher zu gestalten. Dabei soll insbesondere auch der mechanische Aufwand für derartige Vorrichtungen reduziert und die Betriebssicherheit erhöht werden. Dies wird erfindungsgemäß durch Transportvorrichtungen nach den unabhängigen Ansprüchen erreicht. Vorteilhafte Ausführungsformen und Weiterbildungen sind Gegenstand der Unteransprüche.

Die erfindungsgemäße Transportvorrichtung für Behältnisse weist eine Aufnahmeschiene zur Aufnahme eines Halsbereiches der Behältnisse auf. Dabei werden die Behältnisse (in ihrer Längsrichtung bzw. an diesem Halsbereich) von der Aufnahmeschiene gehalten und sie sind innerhalb dieser Aufnahmeschiene bewegbar.

Weiterhin sind seitliche Führungseinrichtungen vorgesehen, welche unterhalb der Aufnahmeschiene angeordnet sind und die Bewegungen der Behältnisse führen. Dabei weisen diese Führungseinrichtungen Führungselemente auf, die wenigstens teilweise in der Längsrichtung der Behältnisse bzw. in der Höhe der Behältnisse bewegbar sind.

Erfindungsgemäß sind in der Bewegungsrichtung der Behältnisse gegenüber der Aufnahmeschiene mehrere Führungselemente vorgesehen und die Bewegungen dieser Führungselemente in der Längsrichtung der Behältnisse sind wenigstens teilweise miteinander gekoppelt.

Unter Führungseinrichtungen werden insbesondere aber nicht ausschließlich die gesamten Führungseinrichtungen also beispielsweise die Führungsgeländer und die Führungselemente verstanden. Durch eine Bewegung der Führungselemente werden bevorzugt auch die Geländer in Längsrichtung der Behältnisse verschoben.

Vorzugsweise ist wenigstens ein Bereich der Transporteinrichtung mit einem gasförmigen Medium und insbesondere mit Luft beaufschlagbar, um die Behältnisse gegenüber der Aufnahmeschiene zu bewegen.

Durch die Kopplung mehrerer derartige Führungselemente, die in der Bewegungsrichtung der Behältnisse hintereinander angeordnet sind, ist es möglich, durch wenige Antriebsvorrichtugen bzw. wenige Motoren die Bewegung einer Vielzahl von derartigen Führungselementen einheitlich zu steuern und damit kann mit vergleichsweise wenigen Antriebseinrichtungen eine Höhenverstellung der gesamten Führungseinrichtungen erfolgen. Dabei ist auch zu beachten, dass eine einheitliche Höhenverstellung der jeweiligen Führungseinrichtungen ausreichend ist, da üblicherweise in den Transportvorrichtungen jeweils einheitliche Gefäßgrößen transportiert werden.

So kann beispielsweise durch einen Benutzer durch manuelle Eingabe die Höhenverstellung der gesamten Führungseinrichtung einheitlich verändert werden. Auch wäre es möglich, mehrere Standardhöheneinstellungen vorzusehen, die jeweils mittels Knopfdruck oder dergleichen angefahren bzw. eingestellt werden können.

Die vorliegende Erfindung ist weiterhin auf eine Transportvorrichtung der oben beschriebenen Art gerichtet, bei der sich wenigstens zwei Führungselemente paarweise bezüglich den Behältnissen gegenüberliegen und die Bewegungen dieser Führungselemente in der Längsrichtung der Behältnisse miteinander durch ein Kopplungselement miteinander gekoppelt sind, wobei dieses Kopplungselement oberhalb der Aufnahmeschiene und bevorzugt auch oberhalb eines Gehäuses der Vorrichtung angeordnet ist.

Damit ist bei dieser Ausführungsform eine Kopplung zweier seitlich bezüglich der Behältnisse gegenüberliegend angeordneter Führungselemente vorgesehen und durch die Anordnung des Kopplungselements oberhalb der Aufnahmeschiene kann der Kopplungsmechanismus im Vergleich zum Stand der Technik vereinfacht und mit einer geringeren Anzahl an Bewegungsübertragungselementen bei gleicher Transporteurlänge ausgestattet werden. Daneben ist das Kopplungselement oberhalb der Aufnahmeschiene leichter zu Reparaturzwecken zugänglich.

Damit kann durch die beiden erfindungsgemäßen Ausführungsformen der Herstellungsaufwand und auch der Betriebsaufwand für die gattungsgemäßen Transportvorrichtungen stark vereinfacht werden.

Die Bewegungen (die Bewegungen in der Längseinrichtung der Behältnisse) wenigstens zweier in der Bewegungsrichtung der Behältnisse hintereinander angeordneter Führungselemente sind mit einer Kopplungseinrichtung mechanisch miteinander gekoppelt. Vorzugsweise sind die Bewegungen einer Vielzahl von in der Bewegungsrichtung der Behältnisse hintereinander angeordneten Führungselemente miteinander gekoppelt. Unter einer Kopplungseinrichtung wird dabei jede Kopplungseinrichtung verstanden, welche Bewegungen zweier zu koppelnder Körper miteinander synchronisierend koppelt.

Vorzugsweise weist die Kopplungseinrichtung eine Antriebsschiene auf, die in der Längsrichtung der Aufnahmeschiene bewegbar ist. Durch die Bewegung dieser Antriebsschiene kann über unterschiedliche und unten im Detail genauer beschriebene mechanische Elemente die Bewegung der Führungselemente in der Längsrichtung der Behältnisse gekoppelt werden.

Vorzugsweise ist die Antriebsschiene oberhalb der Aufnahmeschiene und damit auch oberhalb der zu führenden Behältnisse angeordnet.

Bei einer weiteren vorteilhaften Ausführungsform sind an den Führungselementen Bewegungsstangen vorgesehen und eine Bewegung der Antriebsschiene wird mit einer Vielzahl von Kopplungseinrichtungen in Bewegungen der einzelnen Bewegungsstangen umgesetzt. Mit anderen Worten wird die Bewegung der Antriebsschiene in der Richtung der Führungsschiene mit Kopplungselementen, wie Zahnstangen, Zahnrädern und dergleichen in eine Bewegung der Bewegungsstangen in Längsrichtung der Behältnisse, das heißt in eine vertikale Bewegung umgesetzt. Zu diesem Zwecke können Zahnradgetriebe eingesetzt werden, es wäre jedoch auch möglich, beispielsweise Gummiräder oder dergleichen zur Bewegungsübertragung zu verwenden. Die Bewegungsstangen sind bevorzugt mechanisch mit den Führungselementen verbunden.

Anstelle von Bewegungsstangen können jedoch auch Riemen, Ketten oder dergleichen zur Umsetzung der Bewegungsarten verwendet werden.

Vorzugsweise erstrecken sich die Längsrichtungen der einzelnen Bewegungsstangen in der Längsrichtung der Behältnisse. Es wäre jedoch auch möglich, dass die Längsrichtungen dieser Bewegungsstangen gegenüber der Längsrichtung der Behältnisse geneigt sind. Diese Bewegungsstangen sind vorteilhaft wenigstens teilweise als Zahnstangen ausgeführt.

Bei einer weiteren vorteilhaften Ausführungsform weist auch die Antriebsschiene wenigstens teilweise Zahnstangen auf. Damit erfolgt bei dieser Ausführungsform die Bewegungsübertragung über Zahnradelemente.

Bei einer weiteren vorteilhaften Ausführungsform ist ein Antriebsmittel vorgesehen, welches die Antriebsschiene bewegt. Dabei kann es sich beispielsweise um einen Elektromotor handeln, der ebenfalls über einen Zahnradantrieb die Antriebsschiene gegenüber der Aufnahmeschiene verschiebt. Durch die erfindungsgemäße Kopplung ist es möglich, mit einem einzigen Antriebsmittel, das heißt beispielsweise einem Elektromotor, eine Vielzahl von Bewegungsstangen gekoppelt in der Längsrichtung der Behältnisse zu bewegen. Beispielsweise ist es möglich, fünf oder auch mehr in der Bewegungsrichtung der Behältnisse hintereinanderliegende Bewegungsstangen synchron zueinander zu bewegen. Die Antriebsschiene verläuft bevorzugt geradlinig. Es wäre jedoch auch möglich, dass die Antriebsschiene einen leicht gekrümmten Verlauf annimmt. Auch können mehrere Antriebsschienen hintereinander gekoppelt sein und deren Bewegung durch weitere Kopplungselemente miteinander gekoppelt werden. Dabei kann eine derartige Kopplung auch über gekrümmte Wegstrecken hinweg erfolgen.

Vorzugsweise sind einzelne Führungselemente über ein Gestänge miteinander verbunden. Bei diesem Gestänge handelt es sich, wie oben erwähnt, um das Führungsgestänge, welches bewirkt, dass die Behältnisse auch zwischen den einzelnen Führungselementen geführt werden. So ist es möglich, dass beispielsweise vier oder mehrere Führungselemente an einem Gestänge angreifen und deren Bewegungen in der Längsrichtung bzw. Höhe der Behältnisse einheitlich gesteuert werden.

Bei einer weiteren vorteilhaften Ausführungsform sind die Führungselemente in einer weiteren Richtung bewegbar, wobei diese weitere Richtung im Wesentlichen senkrecht zu der Bewegungsrichtung der Behältnisse und der Längsrichtung der Behältnisse steht. Diese Bewegungsrichtung bezieht sich damit auf eine Richtung, die in Richtung des Durchmessers der Behältnisse verläuft, um auf diese Weise die Vorrichtung an Behältnisse mit unterschiedlichen Durchmessern anzupassen.

Die vorliegende Erfindung ist weiterhin auf ein Verfahren zum Transportieren von Behältnissen gerichtet, wobei die Behältnisse von einer Führungsschiene an einem Halsbereich der Behältnisse gegriffen und mittels Luftdruck entlang dieser Führungsschiene bewegt werden. Dabei werden die Behältnisse durch eine Vielzahl von seitlich bezüglich den Behältnissen angeordneten Führungseinrichtungen geführt, wobei diese Führungseinrichtungen Führungselemente aufweisen und die Längsbewegungen wenigstens zweier in der Bewegungsrichtung der Behältnisse hintereinander angeordneter Führungselemente mechanisch miteinander gekoppelt sind.

Weitere Vorteile und Ausführungsformen ergeben sich aus den beigefügten Zeichnungen. Darin zeigen:
- Fig. 1: eine schematische Darstellung eines erfindungsgemäßen Luftförderers;
- Fig. 2: eine ausschnittsweise Darstellung einer erfindungsgemäßen Vorrichtung zum Transportieren von Behältnissen;
- Fig. 3: einen Antrieb für eine erfindungsgemäße Vorrichtung;
- Fig. 4: einen erfindungsgemäßen Mechanismus zur Höhenverstellung der Führungselemente;
- Fig. 5: einen gekrümmten Abschnitt einer erfindungsgemäßen Vorrichtung zum Transportieren von Behältnissen;
- Fig. 6: eine Detaildarstellung aus Fig. 5;
- Fig. 7: eine Detaildarstellung aus Fig. 5; und
- Fig. 8: eine Detaildarstellung der Vorrichtung aus Fig. 5.

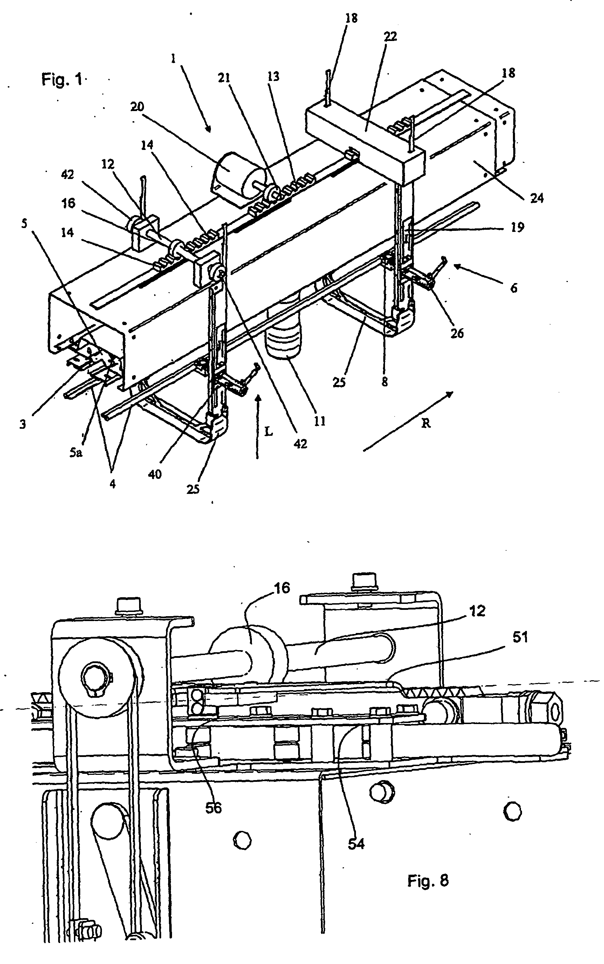

Fig. 1 zeigt schematisch eine erfindungsgemäße Vorrichtung 1 zum Transportieren von Behältnissen. Diese Vorrichtung 1 weist eine Aufnahmeschiene 3 auf, in der die Behältnisse frei hängend geführt werden. Genauer gesagt weisen die Behältnisse, z.B. Kunststoffflaschen 11 üblicherweise in ihrem Kopfbereich einen Umfangskragen auf, der in der Aufnahmeschiene 3 geführt wird. Die Aufnahmeschiene ist in einem Gehäuse 24 untergebracht. Dieses Gehäuse kann mit nicht dargestellten Gebläseeinrichtungen mit Luft versorgt werden.

Oberhalb der Aufnahmeschiene 3 ist ein Luftführungselement 5 vorgesehen. Dieses Luftzuführungselement 5 weist Öffnungsschlitze 5a auf, die in einer bestimmten Vorzugsrichtung geneigt sind, je nach dem, in welche Richtung die Behältnisse bei Beaufschlagung mit Druckluft transportiert werden sollen.

Das Bezugszeichen 6 bezieht sich in seiner Gesamtheit auf eine Führungseinrichtung zur seitlichen Führung der Behältnisse 11. Dabei ist die Führungseinrichtung 6 in der Bewegungsrichtung R der Behältnisse rechtsseitig bezüglich der Behältnisse angeordnet. Diese Führungseinrichtung 6 weist Führungselemente 8 auf, an denen Führungsgeländer 4 angeordnet sind. Eine weitere linksseitige Führungseinrichtung 7 ist in Fig. 1 durch das Gehäuse 24 teilweise verdeckt. Hier ist lediglich das Führungsgeländer 4 dieser linksseitigen Führungseinrichtung 7 erkennbar.

Die Führungselemente 8 und entsprechend die linksseitigen (nicht gezeigten) Führungselemente 9 sind innerhalb von Führungsschienen 19 in vertikaler Richtung bzw. in der Längsrichtung L der Behältnisse verschiebbar. Auf diese Weise kann eine Höhenverstellung der gesamten Führungseinrichtungen 6, 7 erfolgen.

Allgemein wird damit die Höhenverstellung mit Hilfe von Stelleinheiten realisiert, welche zentral z.B. ca. alle 10 m in Förderrichtung beabstandet installiert sind. Dabei kann die Höhenverstellung manuell, mechanisch oder elektrisch mit Positioniermotoren erfolgen.

Das Bezugszeichen 26 bezieht sich auf einen pneumatischen Mehrstellungszylinder. Dieser Mehrstellungszylinder erlaubt eine Vielzahl von Positionen um den seitlichen Abstand der Führungseinrichtungen 6, 7 bzw. der Führungsgeländer 4 zueinander zur Anpassung an verschiedene Behältnisdurchmesser zu verändern. Dieser Mehrstellungszylinder 26 ist ebenfalls gemeinsam mit dem Führungselement 8 in der Längsrichtung L verschiebbar.

Das Bezugszeichen 14 kennzeichnet eine Antriebsschiene, welche hier als Zahnstange ausgeführt ist. Diese Antriebsschiene steht in mechanischer Verbindung mit einer Bewegungsübertragungsschiene 13. Diese Bewegungsübertragungsschiene 13 ist ebenfalls in der Bewegungsrichtung R der Behältnisse bewegbar und wird durch eine Antriebseinrichtung 20, bei der es sich beispielsweise um einen Elektromotor, z.B. Schrittmotor handeln kann, bewegt. Zu diesem Zweck weist die Antriebseinrichtung 20 ein Antriebsrad 21 auf, welches als teilweise gezahntes Rad ausgeführt ist. Die auf diese Weise erzeugte Bewegung der Antriebsschiene 14 wird wiederum auf ein Zahnrad 16 übertragen und bewirkt, dass ein damit verdrehfest verbundenes Kopplungselement 12 in eine Drehbewegung versetzt wird.

Diese Drehbewegung wird wiederum mit außen verdrehfest angeordneten Antriebsrädern 42 auf vertikal verschiebbar geführten Bewegungsstangen 18 übertragen, die sich damit in der Längsrichtung L der Behältnisse 11 bewegen. Diese Bewegung der Längsrichtung L wird unmittelbar auf die mit den Bewegungsstangen verbundenen Führungseinrichtungen 6, 7 übertragen und auf diese Weise eine Höhenverstellung erreicht.

Dabei wird die Höhenverstellung der rechtsseitigen Führungseinrichtung 6 und der linksseitigen Führungseinrichtung 7 durch das Kopplungselement 12 mechanisch gekoppelt. Eine mechanische Kopplung zweier hintereinander angeordneter Führungseinrichtungen 6 bzw. zweier hintereinander angeordneter Führungselemente 8 wird erreicht, indem die Antriebsschienen 14 in ihrer Bewegung in der Richtung R jeweils mit der Bewegungsübertragungsschiene 13 gekoppelt sind. Das Bezugszeichen 22 bezieht sich auf ein Abdeckungsgehäuse zur Abdeckung der Antriebsschiene 14, der Kopplungselement 12 und des Zahnrads 16.

Das Bezugszeichen 25 bezieht sich auf Querbügel. Diese Querbügel verbinden hier die Führungsschienen 19 an ihrem unteren Ende und erhöhen damit die Stabilität der gesamten Anlage.

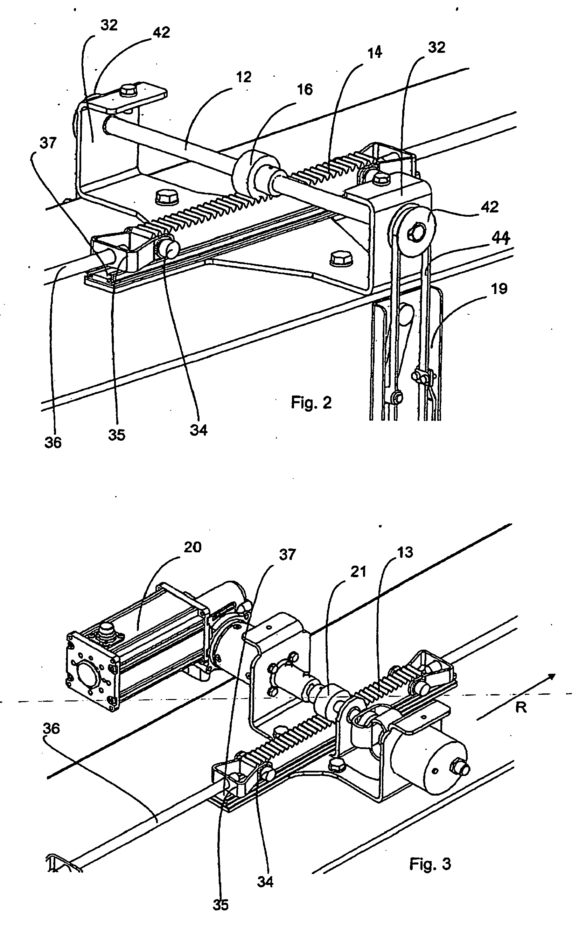

Fig. 2 zeigt eine detailliertere Darstellung des erfindungsgemäßen Antriebsmechanismus in einer weiteren Ausführungsform. Man erkennt, dass die Antriebsschiene 14 links- und rechtsseitig jeweils seitlich herausragende Vorsprünge 34 aufweist. An diesen Vorsprüngen 34 ist eine Kopplungseinrichtung 35 befestigt und an dieser Kopplungseinrichtung 35 wiederum ein Kopplungsgestänge 36. Mit diesem Kopplungsgestänge kann die Antriebsschiene 14 mit einer weiteren Antriebsschiene 14 oder auch der einer Antriebseinrichtung 20 zugeordneten Bewegungsübertragungsschiene 13 verbunden werden. Die Antriebsschiene 14 ist dabei in einem Gleitelement bzw. einer Schiene 37 verschiebbar.

Man erkennt, dass durch die Ausführung des nur teilweise gezahnten Rades 16 Bewegungen in einem relativ begrenzten Ausmaß möglich sind. Diese Bewegung ist jedoch ausreichend, um die nötige Höhenverstellung zu erreichen. Das wellenartig ausgebildete Kopplungselement 12 ist in rechts- und linksseitigen Aufnahmeelementen 32 geführt. Bei der in Fig. 2 gezeigten Ausführungsform sind diese Aufnahmeelemente mit der Führungsschiene 37 verbunden. Eine Drehbewegung des Kopplungselements 12 wird auf je ein rechts- und ein linksseitiges Antriebsrad 42 übertragen und diese Bewegung wiederum auf einen Riemen 44 oder eine Kette. Bevorzugt geeignet ist ein Zahnriemen.

Fig. 3 zeigt eine detaillierte Darstellung eines Antriebsmechanismus für eine erfindungsgemäße Vorrichtung. Ein Antriebsmotor 20 setzt, gegebenenfalls über ein Getriebe, ein Antriebsrad 21 in Drehbewegung. Durch diese Drehbewegung wird die Bewegungsübertragungsschiene 13 z.B. in Richtung R verschoben. Über einen oben bereits beschriebenen Koppelmechanismus 34, 35, 36 wird diese Bewegung in Richtung R auf die oben gezeigten zum Antriebsmotor beabstandeten Antriebsschienen 14 übertragen.

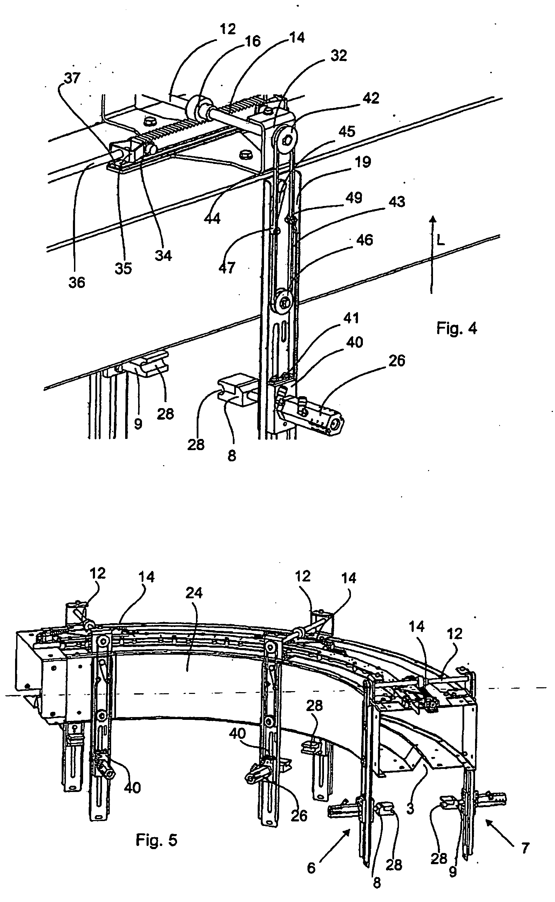

Fig. 4 zeigt eine detailliertere Darstellung des Höhenverstellmechanismusses. Dabei wird, wie oben erwähnt, durch eine Bewegung der Antriebsschiene 14 das Zahnrad 16 und auch das verdrehfest verbundene Kopplungselement 12 gedreht. Diese Drehung wird auf ein Antriebsrad 42 übertragen. Je nach Drehrichtung dieses Antriebsrads hebt oder senkt sich ein Klemmmechanismus 49, der den Riemen 44 mit einer Verbindungsstange 43 verbindet. Bezugszeichen 46 bezieht sich auf ein angetriebenes, an der Führungsschiene 19 frei drehbar gelagertes Rad. Dieses angetriebene Rad 46 und das Antriebsrad 42 sind über den Riemen 44 miteinander verbunden.

Die Verbindungsstange 43 steht über Schraubverbindungen 41 in Verbindung mit einem Schlitten 40, der in der Führungsschiene 19 in Richtung L verschiebbar geführt ist. Auf diese Weise wird die Drehbewegung des Antriebsrades 42 in eine Verschiebebewegung in Richtung L übertragen. An dem Schlitten 40 sind wiederum die Zylinder 26 und die Führungselemente 8 bzw. 9 angeordnet. Das Bezugszeichen 28 bezieht sich auf eine Aufnahmeausnehmung für das Führungsgeländer 4.

Das Bezugszeichen 47 kennzeichnet ein Spannelement, welches an einem Spannhebel 45 angeordnet ist, um den Riemen 44 in gespannter Position zu halten. Das angetriebene Rad 46 ist dabei ebenfalls an der Führungsschiene 19 angeordnet.

Der Fachmann erkennt, dass neben den hier gezeigten Ausführungsformen auch weitere Bewegungsübertragungsmittel denkbar sind, um eine Drehbewegung des Rades 42 in eine Verschiebung des Schlittens 40 in Längsrichtung L zu erreichen. So wäre es beispielsweise möglich, ein Zugseil zu verwenden, welches den Schlitten bei Drehung des Rades 42 in einer bestimmten Richtung anhebt. Das Absenken des Schlittens könnte beispielsweise über die Schwerkraft erfolgen oder auch über zusätzliche Federelemente.

Fig. 5 zeigt einen gekrümmten Abschnitt eines erfindungsgemäßen Luftförderers. Auch hier ist wiederum das Gehäuse 24 dargestellt, an dem (nur schematisch gezeigt) die Führungsschiene 3 angeordnet ist. Bei der in Fig. 5 gezeigten Ausführungsform sind insgesamt drei Antriebsschienen 14 für die Höhenverstellung erkennbar. Die einzelnen Höhenverstellungen arbeiten in gleicher Weise, wie unter Bezugnahme auf Fig. 4 beschrieben und werden daher im Folgenden nicht mehr datailliert dargestellt.

Über Kopplungsgestänge ist es möglich, die einzelnen Antriebsschienen 14 miteinander zu verbinden, so dass über eine (nicht gezeigte) Antriebseinrichtung die Höhenverstellungen aller in Fig. 5 gezeigten Antriebseinrichtungen miteinander synchronisiert werden können. Ein (gekrümmtes) Führungsgestänge kann wiederum in die Ausnehmungen 28 eingebracht werden. Auch hier erlauben Zylinder 26 wieder eine seitliche Verstellung bzw. eine Anpassung an unterschiedliche Behältnisdurchmesser. Die Kopplung der einzelnen Antriebsschienen 14 ist hier trotz der Krümmung des Luftförderers über die oben beschriebenen Kopplungsgestänge möglich.

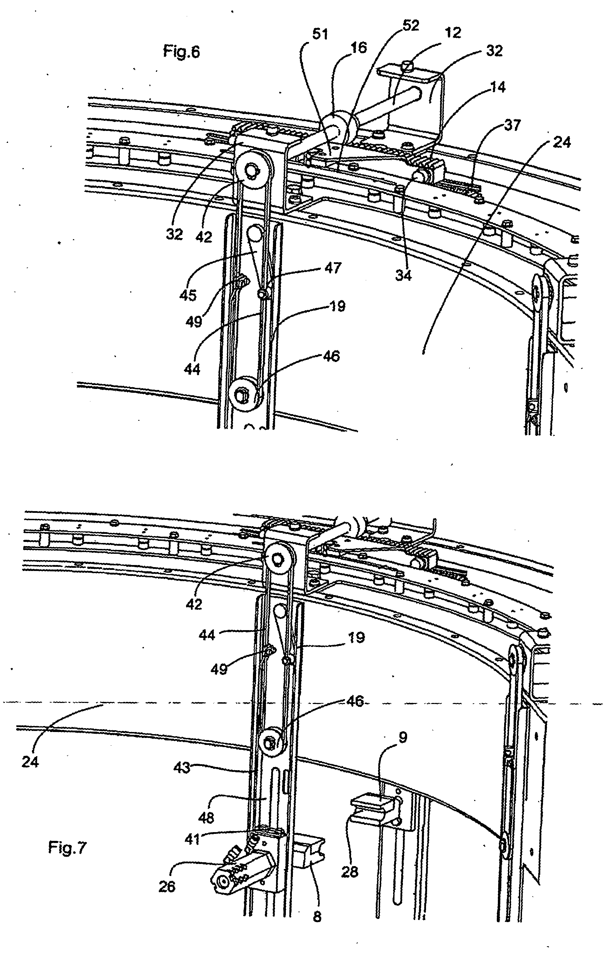

Fig. 6 zeigt eine detaillierte Darstellung der Vorrichtung aus Fig. 5. Man erkennt, dass die Antriebsschiene 14 auch bei dieser Ausführungsform geradlinig ausgeführt ist und in einer ebenfalls geradlinigen Führungsschiene 37 verläuft. Die Antriebsschiene 14 steht in Verbindung mit einer Führungsplatte 51. Diese Führungsplatte 51 wird wiederum in einer Führungsnut 52 geführt, um die Bewegung zu stabilisieren. Der Höhenverstellmechanismus ist in gleicher Weise ausgeführt, wie in Fig. 4 gezeigt und wird daher nicht genauer erläutert.

Fig. 7 zeigt eine detaillierte Darstellung des Höhenverstellmechanismus. Auch hier ist das angetriebene Rad 46 an der Führungsschiene 19 angeordnet und durch eine Bewegung des Riemens 44 kann die Höhenverstellung der Führungselemente 8, 9 synchronisiert zueinander erreicht werden.

Fig. 8 zeigt eine detaillierte Darstellung des Antriebsmechanismus aus Fig. 5. Man erkennt, dass die Führungsplatte 51 ein Eingriffselement 56 aufweist, welches in die in Fig. 6 gezeigte Führungsnut 52 eingreift. Diese Führungsnut 52 ist wiederum in einem Nutträger 54 angeordnet.

Durch die erfindungsgemäße Vorrichtung kann die Einstellung und Installation insbesondere durch die mechanische Ansteuerung der Höhenverstellung auch von weniger geschultem Personal vorgenommen werden. Die Stellzylinder 26 bzw. die Mehrstellungszylinder sind ein bereits aus dem Stand der Technik bekanntes Mittel zum Einstellen von seitlichen Führungsgeländern. Eine Kombination dieser Mehrstellungszylinder mit der erfindungsgemäßen Höhenverstellung ist in einfacher Weise möglich. Weiterhin kann die erfindungsgemäße Vorrichtung mit aus dem Stand der Technik bekannten Transporteur Varianten kombiniert werden also insbesondere mit bekannten Einhausungen. Schließlich ist durch die erfindungsgemäße Vorrichtung eine auch stufenlose Einstellung verschiedener Höheneinstellungen bzw. Einstellungen in Längsrichtung der Behältnisse möglich. Im einfachsten Fall wäre sogar eine manuelle Höhenverstellung möglich. Bevorzugt erfolgt eine motorische Höhenverstellung über eine Potentiometerverstellung mit Gefäßsortenmarkierungen oder Skalen.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Transportvorrichtung (1) für Behältnisse (11) mit einer Aufnahmeschiene (3) zur Aufnahme eines Halsbereiches der Behältnisse, wobei die Behältnisse von der Aufnahmeschiene (3) gehalten werden und innerhalb dieser Aufnahmeschiene bewegbar sind, mit seitlichen Führungseinrichtungen (6, 7) welche unterhalb der Aufnahmeschiene (3) angeordnet sind und die Bewegung der Behältnisse seitlich führen, wobei diese Führungseinrichtungen (6,7) Führungselemente (8, 9) aufweisen, die wenigstens teilweise in Längsrichtung (L) der Behältnisse bewegbar sind, wobei in Bewegungsrichtung (R) der Behältnisse gegenüber der Aufnahmeschiene (3) mehrere Führungselemente (8, 9) vorgesehen sind und die Bewegungen wenigstens zweier in der Bewegungsrichtung (R) der Behältnisse hintereinander angeordneter Führungselemente (8, 9) miteinander mechanisch gekoppelt sind, **dadurch gekennzeichnet, dass** die Führungselemente (8, 9) über eine Kopplungseinrichtung (12, 14, 16, 18) verbunden sind, wobei die Kopplungseinrichtung (12, 14, 16, 18) eine Antriebsschiene (14) aufweist, die in Längsrichtung der Aufnahmeschiene (3) bewegbar ist.

2. Transportvorrichtung (1) nach Anspruch 1, **dadurch gekennzeichnet, dass** sich wenigstens zwei Führungselemente (8, 9) paarweise bezüglich den Behältnissen gegenüberliegen und die Bewegungen dieser Führungselemente (8, 9) in der Längsrichtung (L) der Behältnisse miteinander durch ein Kopplungselement (12) mechanisch miteinander gekoppelt sind, wobei dieses Kopplungselement (12) oberhalb der Aufnahmeschiene (3) angeordnet ist und wobei der seitliche Abstand der Führungseinrichtungen (6, 7) zueinander durch mindestens einen Zylinder (26) einstellbar ist.

3. Transporteinrichtung nach Anspruch 1, **dadurch gekennzeichnet, dass** an den Führungseinrichtungen (6, 7) Bewegungsstangen (18) vorgesehen sind und eine Bewegung der Antriebsschiene (14) mit Hilfe einer Vielzahl von Kopplungselementen (12) in Bewegungen der einzelnen Bewegungsstangen (18) umgesetzt wird.

4. Transporteinrichtung nach Anspruch 3, **dadurch gekennzeichnet, dass** sich die Längsrichtungen der einzelnen Bewegungsstangen (18) in Längsrichtung (L) der Behältnisse erstrecken.

5. Transporteinrichtung nach wenigstens einem der vorangegangenen Ansprüche 3 und 4, **dadurch gekennzeichnet, dass** die Antriebsschiene (14) wenigstens teilweise zahnstangen aufweist.

6. Transporteinrichtung nach wenigsten einem der vorangegangenen Ansprüche 3 - 5, **dadurch gekennzeichnet, dass** ein Antriebsmittel (20) vorgesehen ist, welches die Antriebsschiene (14) bewegt.

7. Transporteinrichtung nach wenigstens einem der vorangegangenen Ansprüche, **dadurch gekennzeichnet, dass** einzelne Führungselemente (8, 9) über ein Führungsgeländer (4) miteinander verbunden sind.

8. Transporteinrichtung nach wenigstens einem der vorangegangenen Ansprüche, **dadurch gekennzeichnet, dass** die Führungselemente (8, 9) in einer weiteren Richtung bewegbar sind, wobei diese weitere Richtung im Wesentlichen senkrecht zu der Bewegungsrichtung (R) der Behältnisse und der Längsrichtung (L) der Behältnisse (11) steht.

9. Verfahren zum Transportieren von Behältnissen (11) wobei die Behältnisse von einer Führungsschiene (3) an einem Halsbereich der Behältnisse gegriffen und mittels Luftströmung entlang dieser Führungsschiene (3) bewegt werden und wobei die Behältnisse durch seitlich bezüglich den Behältnissen angeordnete Führungseinrichtungen (6, 7) geführt werden, wobei diese Führungseinrichtungen (6, 7) Führungselemente (8, 9) aufweisen, die wenigstens teilweise in Längsrichtung (L) der Behältnisse bewegbar sind, und wobei diese Längsbewegungen wenigstens zweier in Bewegungsrichtung (R) der Behältnisse (11) hintereinander angeordneter Führungselemente (8, 9) miteinander mechanisch gekoppelt werden, **dadurch gekennzeichnet, dass** die Führungselemente (8, 9) über eine Kopplungseinrichtung (12, 14, 16, 18) verbunden sind, wobei die Kopplungseinrichtung (12, 14, 16, 18) eine Antriebsschiene (14) aufweist, die in Längsrichtung der Aufnahmeschiene (3) bewegt wird.

## Claims

1. Conveyor apparatus (1) for containers (11), comprising a receiving rail (3) for receiving a neck region of the containers, the containers being retained by the receiving rail (3) and being movable within said receiving rail, and comprising lateral guide arrangements (6, 7) which are arranged below the receiving rail (3) and which guide the movement of the containers laterally, these guide arrangements (6, 7) having guide elements (8, 9) which are movable at least partially in the longitudinal direction (L) of the containers, a plurality of guide elements (8, 9) being provided in the direction of movement (R) of the containers and the movements of at least two of the guide elements (8, 9) arranged one behind the other in the direction of movement (R) of the containers being coupled to one another mechanically, **characterised in that** the guide elements (8, 9) are connected via a coupling arrangement (12, 14, 16, 18), the coupling arrangement (12, 14, 16, 18) having a drive rail (14) which is movable in the longitudinal direction of the receiving rail (3).

2. Conveyor apparatus (1) according to Claim 1, **characterised in that** at least two guide elements (8, 9) are located in pairs opposite one another in relation to the containers and the movements of these guide elements (8, 9) in the longitudinal direction (L) of the containers are coupled to one another mechanically by a coupling element (12), this coupling element (12) being arranged above the receiving rail (3) and the lateral distance of the guide arrangements (6, 7) from one another being adjustable by at least one cylinder (26).

3. Conveyor apparatus according to Claim 1, **characterised in that** movement rods (18) are provided on the guide arrangements (6, 7) and a movement of the guide rail (14) is converted into movements of the individual movement rods (18) by means of a multiplicity of coupling elements (12).

4. Conveyor apparatus according to Claim 3, **characterised in that** the longitudinal directions of the individual movement rods (18) extend in the longitudinal direction (L) of the containers.

5. Conveyor apparatus according to at least one of the preceding Claims 3 and 4, **characterised in that** at least sections of the drive rail (14) have toothed racks.

6. Conveyor apparatus according to at least one of the preceding Claims 3 to 5, **characterised in that** a drive means (20) which moves the drive rail (14) is provided.

7. Conveyor apparatus according to at least one of the preceding claims, **characterised in that** individual guide elements (8, 9) are connected to one another via a guide railing (4).

8. Conveyor apparatus according to at least one of the preceding claims, **characterised in that** the guide elements (8, 9) are movable in a further direction, this further direction being disposed substantially perpendicularly to the direction of movement (R) of the containers and to the longitudinal direction (L) of the containers (11).

9. Method for conveying containers (11), the containers being gripped on a neck region of the containers by a guide rail (3) and being moved by means of air flow along this guide rail (3), and the containers being guided by guide arrangements (6, 7) arranged laterally with respect to the containers, these guide arrangements (6, 7) comprising guide elements (8, 9) which are movable at least partially in the longitudinal direction (L) of the containers, and these longitudinal movements of at least two of the guide elements (8, 9) arranged one behind the other in the direction of movement (R) of the containers (11) being coupled to one another mechanically, **characterised in that** the guide elements (8, 9) are connected via a coupling arrangement (12, 14, 16, 18), the coupling arrangement (12, 14, 16, 18) having a drive rail (14) which is moved in the longitudinal direction of the receiving rail (3).

## Revendications

1. Convoyeur (1) de récipients (11) comportant un rail de réception (3) pour recevoir la zone de col des récipients,
* les récipients étant tenus par le rail de réception (3) et mobiles dans ce rail de réception,
* des installations latérales de guidage (6, 7) situées sous le rail de réception (3) et guidant latéralement le mouvement des récipients, ces installations de guidage (6, 7) comportant des éléments de guidage (8, 9) mobiles au moins partiellement dans la direction longitudinale (L) des récipients,
* plusieurs éléments de guidage (8, 9) dans la direction de mouvement (R) des récipients par rapport au rail de réception (3), et les mouvements d'au moins deux des éléments de guidage (8, 9) installés l'un derrière l'autre dans la direction de déplacement (R) des récipients, sont couplés mécaniquement,
convoyeur **caractérisé en ce que**
* les éléments de guidage (8, 9) sont reliés par une installation de couplage (12, 14, 16, 18), et
* l'installation de couplage (12, 14, 16, 18) comporte une machine d'entraînement (14) mobile dans la direction longitudinale du rail de réception (3).

2. Convoyeur (1) selon la revendication 1,
**caractérisé en ce que**
au moins deux éléments de guidage (8, 9) se font face, par paire, par rapport aux récipients et les mouvements des éléments de guidage (8, 9) dans la direction longitudinale (L) des récipients sont couplés mécaniquement par un élément de couplage (12),
* cet élément de couplage (12) se trouvant au-dessus du rail de réception (3), et
* la distance latérale des installations de guidage (6, 7) l'une de l'autre étant réglable par au moins un vérin (26).

3. Convoyeur selon la revendication 1,
**caractérisé en ce que** les installations de guidage (6, 7) comportent des barres de déplacement (18) le mouvement du rail d'entraînement (14) par plusieurs éléments de couplage (12) est transformé en des mouvements des différentes barres de déplacement (18).

4. Convoyeur selon la revendication 3,
**caractérisé en ce que**
les directions longitudinales des différentes barres de déplacement (18) s'étendent dans la direction longitudinale (L) des récipients.

5. Convoyeur selon au moins l'une des revendications précédentes 3 et 4,
**caractérisé en ce que**
le rail d'entraînement (14) est muni au moins en partie de crémaillères.

6. Convoyeur selon au moins l'une des revendications précédentes 3 à 5,
**caractérisé par**
un moyen d'entraînement (20) qui déplace l'unité d'entraînement (14).

7. Convoyeur selon au moins l'une des revendications précédentes,
**caractérisé en ce que**
les différents éléments de guidage (8, 9) sont reliés par une rampe de guidage (4).

8. Convoyeur selon au moins l'une des revendications précédentes,
**caractérisé en ce que**
les éléments de guidage (8, 9) sont mobiles dans une première direction et cette première direction est pratiquement perpendiculaire à la direction de déplacement (R) des conteneurs et à la direction longitudinale (L) des récipients (11).

9. Procédé de transport de récipients (11) pris par un rail de guidage (3) dans la zone de fixation des récipients et déplacé par une veine d'air le long de ce rail de réception (3),
* le rapport entre les installations de guidage (6, 7) installées latéralement par rapport aux récipients,
* ces installations de guidage (6, 7) comportant des éléments de guidage (8, 9), de préférence mobiles en partie dans la direction longitudinale (L) des récipients, et le mouvement longitudinal d'au moins deux récipients (11) dans cette direction de déplacement (R) des récipients (11) correspond à des éléments de guidage (8, 9) l'un derrière l'autre et couplés mécaniquement l'un à l'autre,
**caractérisé en ce que**
* les éléments de guidage (8, 9) sont reliés par une installation de couplage (12, 14, 16, 18), et
* l'installation de couplage (12, 14, 16, 18) a un rail d'entraînement (14) qui déplace le rail de réception (3) dans la direction longitudinale.
